# FASCICULE DE BREVET EUROPEEN

(11) **EP 1 273 119 B1**
(45) Date de publication et mention de la délivrance du brevet: **31.03.2004**
(21) Numéro de dépôt: 01966786.4
(22) Date de dépôt: 04.04.2001
(51) Int. Cl.: H04J 14/02

(54) **DISPOSITIF DE TRANSMISSION A FIBRES OPTIQUES ET A MULTIPLEXAGE EN LONGUEUR D'ONDE**
LICHTWELLENLEITER-ÜBERTRAGUNGSEINRICHTUNG MIT WELLENLÄNGENMULTIPLEX
WAVELENGTH MULTIPLEXING OPTICAL FIBRE TRANSMISSION DEVICE

(30) Priorité: 11.04.2000 FR 0004649
(43) Date de publication de la demande: 08.01.2003
(73) Titulaire: Ifotec, 38500 Voiron (FR)
(72) Inventeur: BILLET, Gilles, F-38500 Voiron (FR); SILLANS, Christian, F-38260 La Frette (FR)
(74) Mandataire: Jouvray, Marie-Andrée
(86) Numéro de dépôt international: PCT/FR2001/001016
(87) Numéro de publication internationale: WO 2001/078282

(56) Documents cités:
- EP-A- 0 706 270
- WO-A-99/23851
- US-A- 5 071 214
- US-A- 5 809 190

## Description

### Domaine technique de l'invention

L'invention est relative à un dispositif de transmission à fibres optiques et à multiplexage en longueurs d'ondes, notamment pour des réseaux de télécommunications métropolitains, comprenant :
- des émetteurs optiques en liaison avec des équipements électroniques d'émission pour transmettre des signaux optiques de longueurs d'ondes correspondants à des canaux prédéterminés,
- des moyens de multiplexage des signaux optiques émis par les émetteurs optiques,
- des moyens pour concentrer les signaux optiques multiplexés en longueurs d'ondes vers un réseau de transmission à fibres optiques s'étendant sur une distance prédéterminée,
- au moins un amplificateur optique, lequel restitue un niveau de signal optique avant un tri des longueurs d'ondes à travers des moyens de démultiplexage optique,
- et des récepteurs optiques recevant les signaux optiques multiplexés et sélectionnés par les moyens de démultiplexage.

### État de la technique

La technique de transmission DWDM de multiplexage en longueur d'onde combine l'effet de multiplexage avec l'amplification optique pour réaliser des réseaux de transmission à longue distance et à haut débit.

Dans les systèmes DWDM connus, un amplificateur optique est généralement implanté en tête de réseau, juste après le multiplexeur et avant le réseau de transmission des fibres optiques. Le contrôle spectral du gain de l'amplificateur optique est réalisé au moyen de filtres égaliseurs ou à partir d'un contrôle sélectif des phénomènes de saturation. Une autre solution connue consiste à utiliser des atténuateurs après le démodulateur pour atténuer les canaux présentant le gain le plus important.

Ces dispositifs connus sont chers, et limitent le rendement de l'amplificateur, ainsi que sa capacité de transmission.

Un autre example de l'état de la technique est US 5 809 190.

### Objet de l'invention

L'objet de l'invention consiste à réaliser un dispositif de transmission à fibres optiques et à multiplexage en longueurs d'ondes, ayant une structure simplifiée peu onéreuse pour des réseaux métropolitains, et bénéficiant d'une redondance pour la transmission des signaux.

Le dispositif selon l'invention est caractérisé en ce que :
- les moyens de multiplexage comportent un combineur optique composé d'une série de n coupleurs optiques à répartition dissymétrique en cascade sur plusieurs étages permettant de combiner les signaux optiques reçus des émetteurs optiques de différentes longueurs d'ondes, le dernier coupleur étant agencé pour acheminer les signaux optiques multiplexés vers une ligne de transmission principale et une ligne de transmission de secours,
- le rapport de couplage des différents coupleurs optiques est ajusté au niveau des canaux pour compenser la variation du gain spectral de l'amplificateur optique.

Selon une caractéristique de l'invention, l'amplificateur optique est disposé du côté récepteur avant le démultiplexeur optique.

Selon une caractéristique de l'invention, la ligne de transmission principale et la ligne de transmission de secours sont connectées à un commutateur optique piloté par un microcontrôleur pour assurer la redondance par basculement automatique sur la ligne de transmission de secours en cas d'incident sur la ligne de transmission principale, la sortie du commutateur optique étant reliée par une fibre optique à l'entrée de l'amplificateur.

Selon un mode de réalisation préférentiel de l'invention,
- chaque coupleur du premier étage reçoit deux signaux optiques de longueurs d'ondes différentes issus d'une paire d'émetteurs optiques,
- chaque coupleur du deuxième étage reçoit les signaux optiques de sortie d'une paire de coupleurs du premier étage,
- les deux sorties du dernier coupleur de l'étage sont en liaison avec lesdites lignes de transmission principale et de secours.

Les émetteurs optiques sont formés à titre d'exemples par des transmetteurs lasers stabilisés en longueur d'onde. Les récepteurs optiques des signaux démultiplexés en longueurs d'ondes sont constitués par des photodiodes associées chacune à un circuit de contrôle automatique de gain.

Le rapport de couplage des différents coupleurs optiques du combineur optique (16) est obtenu soit par polissage-assemblage, soit par fusion-étirage, soit en optique intégrée.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels :
la figure 1 est une vue synoptique du dispositif de transmission à fibres optiques et à multiplexage selon l'invention ;
la figure 2 représente une vue schématique du combineur optique à coupleurs dissymétriques ;
la figure 3 montre un tableau avec les différentes combinaisons de coupleurs pour la compensation du gain spectral de l'amplificateur ;
la figure 4 montre la courbe de gain de l'amplificateur optique avant compensation.

### Description d'un mode de réalisation préférentiel

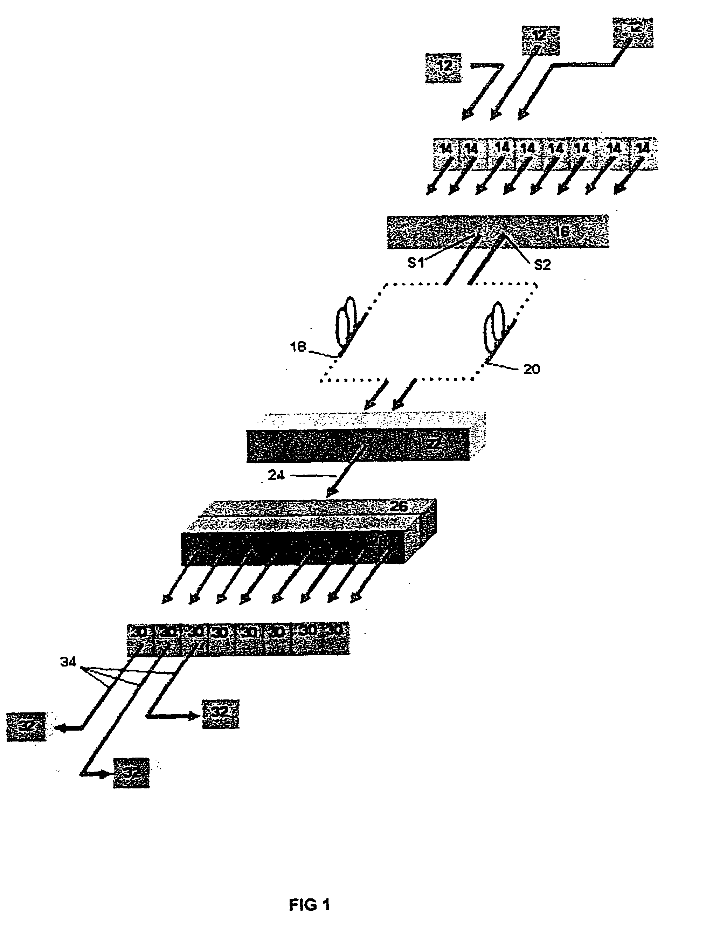

En référence à la figure 1, un dispositif de transmission 10 à fibres optiques et à multiplexage en longueurs d'onde, est utilisé pour la transmission de signaux de télécommunications dans les réseaux métropolitains. Il s'agit d'un système de DWDM à plusieurs longueurs d'onde λ1 à λ8 (huit à titre d'exemple), espacées de 200GHz, et permettant de transporter des signaux d'une largeur de bande de plus de 2GHz sur une distance donnée, par exemple de 50 kilomètres.

À l'émission, les équipements électroniques d'émission 12 sont connectés à une pluralité d'émetteurs optiques 14 équipés de transmetteurs lasers stabilisés en longueur d'ondes. Un combineur optique 16 reçoit les signaux optiques de longueurs d'ondes λ1 à λ8 émis par les différents transmetteurs lasers, et comporte deux sorties S1 et S2. La sortie S1 concentre les signaux de l'ensemble des émetteurs optiques 14 sur une fibre optique d'une ligne de transmission principale 18 ayant une distance de plusieurs kilomètres. L'autre sortie S2 du combineur optique 16 fournit une copie du même signal sur une fibre optique d'une ligne de transmission 20 de secours.

À la réception, un commutateur optique 22 est piloté par un microcontrôleur pour sélectionner la ligne 18 ou 20 utilisée pour la transmission. Le commutateur 22 assure la redondance du dispositif de transmission 10 en provoquant le basculement automatique sur la ligne de secours 20 en cas d'incident sur la ligne principale 18. La sortie du commutateur optique 22 est branchée par une fibre optique 24 à un amplificateur 26 optique,. lequel restitue un niveau de signal optique prédéterminé avant un tri des longueurs d'ondes λ1 à λ8 à travers un démultiplexeur optique 28. Ce dernier sélectionne les signaux optiques démultiplexés de longueurs d'ondes λ1 à λ8 délivrés à des récepteurs optiques 30. Il peut être constitué soit par un démultiplexeur simple soit, de manière connue, par une combinaison appropriée de démultiplexeurs et d'un ou de plusieurs entrelaceurs (« interleaver »).

Le récepteur optique 30 pour chaque longueur d'onde λ1 à λ8, comporte une photodiode associée à un circuit de contrôle automatique de gain. Des équipements électroniques de réception 32 sont connectés électriquement par des conducteurs 34 aux différents récepteurs optiques.

L'amplificateur 26 à optique intégrée est disposé côté récepteur juste avant le démultiplexeur optique 28.

À titre d'exemple, les huit longueurs d'ondes choisies selon les canaux de la grille UIT et séparées de 200GHz, sont les suivantes :
λ1= 1531,90nm (canal 57)
λ2= 1533,47nm (canal 55)
λ3= 1535,04nm (canal 53)
λ4= 1536,61 nm (canal 51)
λ5= 1538.19nm (canal 49)
λ6= 1539,77nm (canal 47)
λ7= 1541,35nm (canal 45)
λ8= 1542,94nm (canal 43)

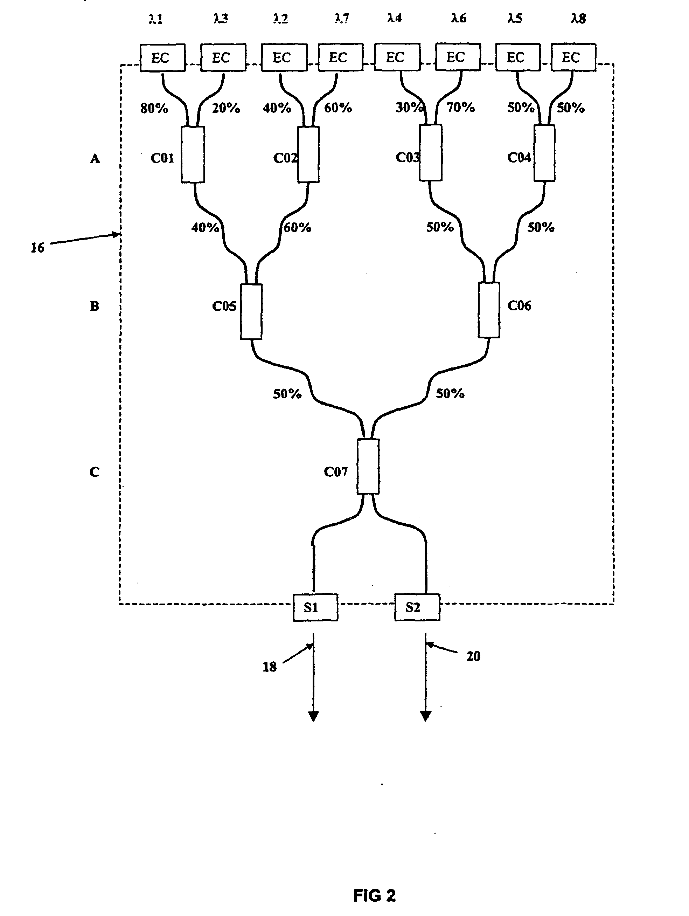

Sur la figure 2, le combineur optique 16 est composé d'une série de n coupleurs optiques CO1, CO2, CO3, CO4, CO5, CO6, CO7, à répartition dissymétrique en cascade selon trois étages. Un tel combineur 16 permet de combiner les signaux optiques reçus des émetteurs optiques 14 de différentes longueurs d'onde λ1 à λ8, et de les acheminer vers la ligne de transmission principale 18, et la ligne de transmission 20 de secours. Il remplace le multiplexeur classique de l'art antérieur.

La technologie des coupleurs optiques CO1 à CO7 peut être effectuée de différentes manières connues en soi:
- soit par polissage-assemblage consistant à sceller deux fibres optiques dans un bloc de verre, à effectuer le polissage en positionnant le coeur en surface, et à assembler les deux blocs pour assurer le couplage de la lumière entre les coeurs des fibres. Le rapport de couplage peut être ajusté en faisant varier l'angle entre les deux blocs ;
- soit par fusion-étirage consistant à chauffer et à étirer une fibre pour diminuer le diamètre de son coeur et de sa gaine. Le coupleur est formé par deux fibres adjacentes étirées constituant un adaptateur d'entrée, une région de couplage, et un adaptateur de sortie. La lumière entrant dans l'une des fibres d'entrée est partagée entre deux fibres de sortie ;
- soit en optique intégrée par ajustement des dimensions des guides d'ondes.

Le rapport de couplage de chaque coupleur optique CO1 à CO7 est fonction de la longueur d'interaction des fibres couplées, et de l'état de polarisation de la lumière incidente. Il permet une répartition inégale de la puissance entre les entrées et les sorties.

Le rapport de couplage des coupleurs CO1 à CO6 du premier étage et du deuxième étage est ajusté par rapport au gain spectral de l'amplificateur 26 à optique intégrée.

Au niveau du premier étage, le premier coupleur CO1 reçoit les signaux optiques de longueurs d'onde λ1 et λ3 avec un rapport de couplage 20/80. Le deuxième coupleur CO2 reçoit les signaux optiques de longueurs d'onde λ2 et λ7 avec un rapport de couplage 40/60. Le troisième coupleur CO3 reçoit les signaux optiques de longueurs d'onde λ4 et λ6 avec un rapport de couplage 30/70. Le quatrième coupleur CO4 reçoit les signaux optiques de longueurs d'onde λ5 et λ8 avec un rapport de couplage 50/50.

Au niveau du deuxième étage, le cinquième coupleur CO5 reçoit les signaux de sorties de longueurs d'onde λ1, λ3, λ2 et λ7 des premier et deuxième coupleurs CO1 et CO2 avec un rapport de couplage 40/60. Le sixième coupleur CO6 reçoit les signaux de sorties de longueurs d'onde λ4, λ6, λ5 et λ8 des troisième et quatrième coupleurs CO3 et CO4 avec un rapport de couplage 50/50.

Le septième coupleur CO7 du troisième étage reçoit les signaux de sorties de l'ensemble des longueurs d'onde du cinquième coupleur CO5 et du sixième coupleur CO6 avec un rapport de couplage 50/50. Il permet d'assurer la redondance des lignes de transmission 18 et 20.

Une seule sortie est utilisée pour les coupleurs CO1-CO6 des deux premiers étages, tandis que le coupleur CO7 du troisième étage fait usage des deux sorties pour alimenter la ligne de transmission 18 principale, et la ligne de transmission 20 de secours.

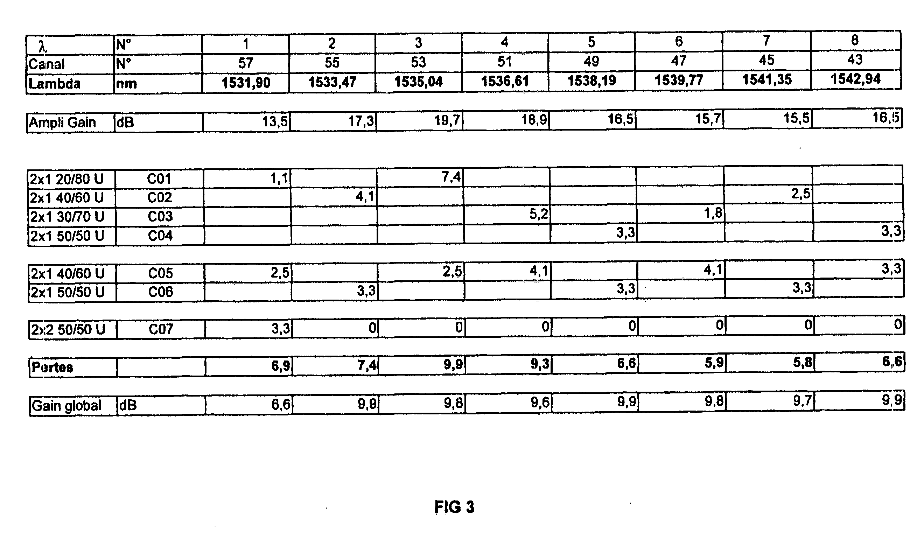

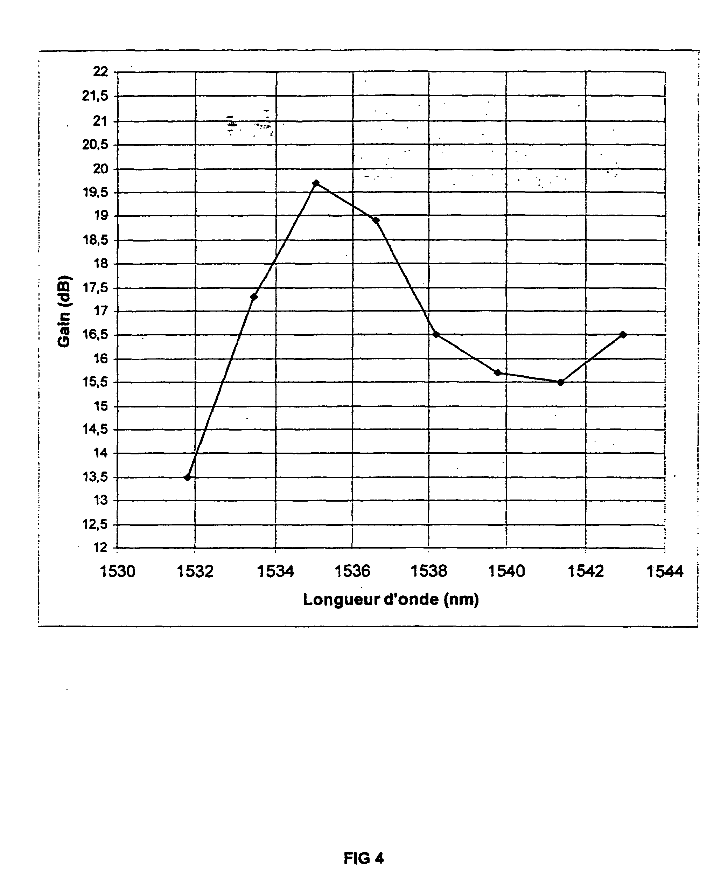

En référence aux figures 3 et 4, le couplage dissymétrique des coupleurs CO1 à CO7 permet de compenser la variation de gain de l'amplificateur optique 26 en fonction des différents canaux. Les pertes de transmission dans les différents coupleurs CO1 à CO7 permettent d'obtenir à la sortie de l'amplificateur optique 26 un gain global sensiblement constant. Un tel contrôle spectral du gain est réalisé sans faire usage de filtres égaliseurs, et d'atténuateurs affectés aux canaux de gain important.

La présence, au niveau de l'émission d'un tel combineur optique 16 à coupleurs dissymétriques CO1-CO7, permet d'assurer à la fois le multiplexage des longueurs d'onde I1 à I8 en provenance des émetteurs optiques 14, et l'égalisation du gain de l'amplificateur optique 26 se trouvant du côté de la réception. Le nombre des sorties du combineur optique 16 est variable en fonction de la répartition des coupleurs.

## Revendications

1. Dispositif de transmission à fibres optiques et à multiplexage en longueurs d'ondes, notamment pour des réseaux de télécommunications métropolitains, comprenant :
- des émetteurs optiques (14) en liaison avec des équipements électroniques d'émission (12) pour transmettre des signaux optiques de longueurs d'ondes (λ1 à λ8) correspondants à des canaux prédéterminés,
- des moyens de multiplexage des signaux optiques émis par les émetteurs optiques (14),
- des moyens pour concentrer les signaux optiques multiplexés en longueur d'onde vers un réseau de transmission à fibres optiques s'étendant sur une distance prédéterminée,
- au moins un amplificateur (26) optique, lequel restitue un niveau de signal optique avant un tri des longueurs d'ondes (λ1 à λ8) à travers des moyens de démultiplexage optique (28),
- et des récepteurs optiques (30) recevant les signaux optiques multiplexés et sélectionnés par les moyens de démultiplexage (28),
**caractérisé en ce que** :
- les moyens de multiplexage comportent un combineur optique (16) composé d'une série de n coupleurs optiques (CO1, CO2, ...CO7) à répartition dissymétrique en cascade sur plusieurs étages (A, B, C...) permettant de combiner les signaux optiques reçus des émetteurs optiques (14) de différentes longueurs d'ondes (λ1 à λ8), le dernier coupleur (CO7) étant agencé pour acheminer les signaux optiques multiplexés vers une ligne de transmission principale (18) et une ligne de transmission de secours (20),
- le rapport de couplage des différents coupleurs optiques est ajusté au niveau des canaux pour compenser la variation du gain spectral de l'amplificateur (26) optique.

2. Dispositif de transmission à fibres optiques selon la revendication 1, **caractérisé en ce que** l'amplificateur (26) optique est disposé du côté récepteur avant les moyens de démultiplexage optique (28).

3. Dispositif de transmission à fibres optiques selon la revendication 2, **caractérisé en ce que** la ligne de transmission principale (18) et la ligne de transmission de secours (20) sont connectées à un commutateur optique (22) piloté par un microcontrôleur pour assurer la redondance par basculement automatique sur la ligne de transmission de secours (20) en cas d'incident sur la ligne de transmission principale (18), la sortie du commutateur optique (22) étant reliée par une fibre optique (24) à l'entrée de l'amplificateur (26).

4. Dispositif de transmission à fibres optiques selon l'une des revendications précédentes, **caractérisé en ce que** :
- chaque coupleur (CO1, CO2, CO3, CO4) du premier étage (A) reçoit deux signaux optiques de longueurs d'ondes différentes issus d'une paire d'émetteurs optiques (14),
- chaque coupleur (CO5, CO6) du deuxième étage (B) reçoit les signaux optiques de sortie d'une paire de coupleurs (CO1, CO2 ; CO3, CO4) du premier étage (A),
- les deux sorties du dernier coupleur (CO7) de l'étage (C) sont en liaison avec lesdites lignes de transmission principale (18) et de secours (20).

5. Dispositif de transmission à fibres optiques selon l'une des revendications précédentes, **caractérisé en ce que** les émetteurs optiques (14) sont formés par des transmetteurs lasers stabilisés en longueurs d'ondes.

6. Dispositif de transmission à fibres optiques selon l'une des revendications précédentes, **caractérisé en ce que** les récepteurs optiques (30) des signaux démultiplexés en longueurs d'ondes sont constitués par des photodiodes associées chacune à un circuit de contrôle automatique de gain.

7. Dispositif de transmission à fibres optiques selon l'une des revendications précédentes, **caractérisé en ce que** le rapport de couplage des différents coupleurs optiques (CO1-CO7) du combineur optique (16) est obtenu soit par polissage-assemblage, soit par fusion-étirage, soit par optique intégrée.

## Claims

1. A wavelength multiplexing optical fibre transmission device, notably for metropolitan area telecommunication networks, comprising:
- optical transmitters (14) connected with electronic transmission devices (12) to transmit optical signals of wavelengths (λ1 to λ8) matching preset channels,
- means for multiplexing optical signals transmitted by the optical transmitters (14),
- means for concentrating the wavelength multiplexed optical signals to an optical fibre transmission network extending over a preset distance,
- at least one optical amplifier (26), which reproduces a level of optical signal before sorting the wavelengths (λ1 to λ8) through optical demultiplexing means (28),
- and optical receivers (30) receiving the optical signals multiplexed and selected by the demultiplexing means (28),
**characterised in that** :
- the multiplexing means comprise an optical combiner (16) consisting of a series of n optical couplers (CO1, CO2, ...CO7) with asymmetric cascade distribution over several stages (A, B, C...) for combining the optical signals received from the optical transmitters (14) of different wavelengths (λ1 to λ8), whereas the last coupler (CO7) is arranged to route the multiplexed optical signals to a main transmission line (18) and a standby transmission line (20),
- the coupling ratio of the different optical couplers is adjusted at the channels to compensate the spectral gain variation of the optical amplifier (26).

2. An optical fibre transmission device according to claim 1, **characterised in that** the optical amplifier (26) is arranged on the receiver side before the optical demultiplexing means (28).

3. An optical fibre transmission device according to claim 2, **characterised in that** the main transmission line (18) and the standby transmission line (20) are connected to an optical switch (22) driven by a microcontroller for redundancy by switching automatically to the standby transmission line (20) in case of incident on the main transmission line (18), whereas the output of the optical switch (22) is connected b y an optical fibre (24) to the input of the amplifier (26).

4. An optical fibre transmission device according to one of the previous claims, **characterised in that**
- each coupler (CO1, CO2, CO3, CO4) of the first stage (A) receives two optical signals of different wavelengths from a pair of optical transmitters (14),
- each coupler (CO5, CO6) of the second stage (B) receives the output optical signals from a pair of couplers (CO1, CO2 ; CO3, CO4) of the first stage (A),
- both outputs of the last coupler (CO7) of the stage (C) are connected with said main (18) and standby (20) transmission lines.

5. An optical fibre transmission device according to one of the previous claims, **characterised in that** the optical transmitters (14) are formed by wavelength stabilised laser transmitters.

6. An optical fibre transmission device according to one of the previous claims, **characterised in that** the optical receivers (30) of the wavelength demultiplexed signals are formed by photodiodes each associated with an automatic gain control circuit.

7. An optical fibre transmission device according to one of the previous claims, **characterised in that** the coupling ratio of the different optical couplers (CO1-CO7) of the optical combiner (16) is obtained either by polishing-assembly or by fusion-stretching or by integrated optics.

## Patentansprüche

1. Lichtwellenleiter-Übertragungsvorrichtung mit Wellenlängenmultiplex, insbesondere für Telekommunikationsnetze in Großstädten, die umfasst:
- optische Sender (14), die mit elektronischen Sendeausrüstungen (12) verbunden sind, zur Übertragung optischer Signale mit Wellenlängen (λ1 bis λ8), die vorbestimmten Kanälen entsprechen,
- Mittel zum Multiplexen der von den optischen Sendern (14) abgegebenen optischen Signale,
- Mittel zum Bündeln der wellenlängenmultigeplexten optischen Signale in Richtung auf ein Lichtwellenleiternetz, das sich über eine vorbestimmte Distanz erstreckt,
- mindestens einen optischen Verstärker (26), der eine optische Signalebene vor einer Trennung der Wellenlängen (λ1 bis λ8) durch Mittel zum optischen Demultiplexen (28) wiedergibt,
- und optische Empfänger (30), welche die multigeplexten und von den Mitteln zum Demultiplexen (28) ausgewählten optischen Signale empfangen,
**dadurch gekennzeichnet, dass**:
- die Multiplex-Mittel einen optischen Kombinator (16) umfassen, der von einer Reihe von n optischen Kopplern (CO1, CO2, ...CO7) mit asymmetrischer Verteilung in Kaskade über mehrere Stufen (A, B, C...) gebildet wird, der eine Kombination der von den optischen Sendern (14) unterschiedlicher Wellenlängen (λ1 bis λ8) empfangenen optischen Signale ermöglicht, wobei der letzte Koppler (CO7) so vorgesehen ist, dass er die multigeplexten optischen Signale in Richtung auf eine Hauptsendeleitung (18) und eine Hilfssendeleitung (20) leitet,
- wobei das Kopplungsverhältnis zwischen den einzelnen optischen Kopplern im Bereich der Kanäle angepasst wird, um die Spektralverstärkungsschwankungen des optischen Verstärkers (26) auszugleichen.

2. Lichtwellenleiter-Übertragungsvorrichtung nach Anspruch 1, **dadurch gekennzeichnet, dass** der optische Verstärker (26) auf der Empfängerseite angeordnet ist, vor den Mitteln zum optischen Demultiplexen (28).

3. Lichtwellenleiter-Übertragungsvorrichtung nach Anspruch 2, **dadurch gekennzeichnet, dass** die Hauptübertragungsleitung (18) und die Hilfsübertragungsleitung (20) an einen optischen Schalter (22) angeschlossen sind, der von einem Microcontroller gesteuert wird, um im Falle einer Störung in der Hauptübertragungsleitung (18) die Redundanz sicherzustellen durch automatische Umschaltung auf die Hilfsübertragungsleitung (20), wobei der Ausgang des optischen Schalters (22) durch einen Lichtwellenleiter (24) an den Eingang des Verstärkers (26) gelegt ist.

4. Lichtwellenleiter-Übertragungsvorrichtung nach einem der vorstehenden Ansprüche, **dadurch gekennzeichnet, dass**:
- jeder Koppler (CO1, CO2, CO3, CO4) der ersten Stufe (A) zwei optische Signale unterschiedlicher Wellenlängen empfängt, die von einem Paar optischer Sender (14) kommen,
- jeder Koppler (CO5, CO6) der zweiten Stufe (B) die optischen Ausgangssignale eines Kopplerpaares (CO1, CO2; CO3, CO4) der ersten Stufe (A) empfängt,
- die beiden Ausgänge des letzten Kopplers (CO7) der Stufe (C) mit der Haupt- (18) und der Hilfsübertragungsleitung (19) verbunden sind.

5. Lichtwellenleiter-Übertragungsvorrichtung nach einem der vorstehenden Ansprüche, **dadurch gekennzeichnet, dass** die optischen Sender (14) von wellenlängenstabilisierten Lasertransmittern gebildet werden.

6. Lichtwellenleiter-Übertragungsvorrichtung nach einem der vorstehenden Ansprüche, **dadurch gekennzeichnet, dass** die optischen Empfänger (30) der wellenlängen-demultigeplexten Signale von Fotodioden gebildet werden, die jeweils mit einer Schaltung zur automatischen Verstärkungskontrolle verbunden sind.

7. Lichtwellenleiter-Übertragungsvorrichtung nach einem der vorstehenden Ansprüche, **dadurch gekennzeichnet, dass** das Kopplungsverhältnis der einzelnen optischen Koppler (CO1-CO7) des optischen Steuerschalters (16) entweder durch Polieren und Verbinden, durch Schmelzen und Strecken oder durch integrierte Optik erhalten wird.
